# FASCICULE DE BREVET EUROPEEN

(11) **EP 2 238 026 B1**
(45) Date de publication et mention de la délivrance du brevet: **23.01.2013**
(21) Numéro de dépôt: 09710443.4
(22) Date de dépôt: 04.02.2009
(51) Int. Cl.: B64C 13/50

(54) **SYSTEME DISTRIBUE DE COMMANDE DE VOL**
VERTEILTES FLUGSTEUERUNGSSYSTEM
DISTRIBUTED FLIGHT CONTROL SYSTEM

(30) Priorité: 08.02.2008 FR 0850806
(43) Date de publication de la demande: 13.10.2010
(73) Titulaire: AIRBUS OPERATIONS, 31060 Toulouse (FR)
(72) Inventeur: FERVEL, Marc, F-31300 Toulouse (FR); AUBERT, Jean-Jacques, F-31820 Pibrac (FR); MAUSSION, Antoine, F-31200 Toulouse (FR)
(74) Mandataire: Ilgart, Jean-Christophe
(86) Numéro de dépôt international: PCT/FR2009/050166
(87) Numéro de publication internationale: WO 2009/101324

(56) Documents cités:
- EP-A- 0 594 144
- EP-A- 1 353 247
- FR-A- 2 901 379

## Description

### DOMAINE TECHNIQUE

La présente invention concerne de manière générale les systèmes de commande de vol (*Flight Control* Systems) dans le domaine de l'aéronautique.

### ÉTAT DE LA TECHNIQUE ANTÉRIEURE

Le système de commande de vol d'un aéronef fait le lien entre les organes de pilotage (manche, palonnier, etc.) et les gouvernes aérodynamiques. Les avions de ligne modernes possèdent des systèmes de commande de vol de type « *fly by wire* » dans lesquels les actions mécaniques sur les organes de pilotage sont converties en des signaux analogiques qui sont transmis à des actionneurs manoeuvrant les gouvernes.

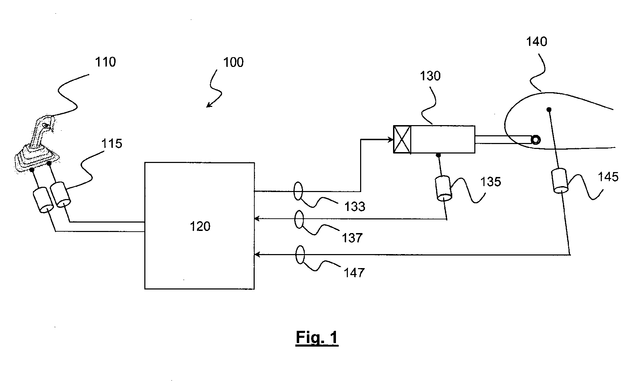

La Fig. 1 illustre un système de commande de vol, 100, connu de l'état de la technique. On a représenté un organe de pilotage, 110, par exemple un joystick, équipé d'un ou de plusieurs capteurs, 115, par exemple des capteurs de position et/ou des capteurs angulaires fournissant des informations de position et/ou d'orientation au calculateur de commande de vol, 120. Le calculateur 120 détermine, à partir des informations reçues des différents organes de pilotage 110, et/ou, le cas échéant, du pilote automatique, les commandes de vol à appliquer aux actionneurs 130. Ces actionneurs sont typiquement des vérins hydrauliques commandés par des électrovannes ou des moteurs électriques agissant sur les gouvernes aérodynamiques de l'aéronef, 140. Les actionneurs 130, d'une part, et les gouvernes aérodynamiques, 140, d'autre part, sont équipés de capteurs notés respectivement 135 et 145. Ces capteurs renseignent le calculateur 120 sur les positions et/ou orientations des éléments mobiles des actionneurs ainsi que sur celles des gouvernes. Par exemple, un capteur 135 pourra indiquer la position en translation d'un vérin, un capteur 145, l'orientation d'un volet.

Le calculateur 120 possède à la fois une fonction de commande et une fonction de surveillance. Il est relié aux actionneurs par des premiers câbles 133 destinés à transmettre les signaux analogiques de commande. Il est également relié aux capteurs 135 et 145 équipant respectivement les actionneurs et les gouvernes elles-mêmes par des seconds câbles, 137, et des troisièmes câbles, 137. Il peut ainsi à tout moment surveiller l'état des actionneurs et vérifier que les commandes ont bien été exécutées.

Un tel système de commande de vol est par exemple décrit dans le brevet EP-B-1353247, qui décrit toutes les caractéristiques du préambule des revendications 1 et 2, relatif à un système de commande de vol pour aéronef pour commander une pluralité d'actionneurs. Le système de commande selon ce brevet comprend un bus de communication et au moins un calculateur adapté à calculer les commandes de vol et à les transmettre sur le bus sous forme de messages de commande. Un terminal distant est relié au bus et permet de contrôler un actionneur de gouverne et d'acquérir l'état de cet actionneur à partir d'un capteur équipant ce dernier.

Le système de commande de vol décrit ci-dessus présente toutefois un certain nombre d'inconvénients. Tout d'abord, il nécessite un grand nombre de câbles, entre le calculateur et l'ensemble des actionneurs et des gouvernes. Ce nombre est d'autant plus important que le nombre d'entrées/sorties des actionneurs est en constante augmentation du fait de leur complexité croissante. Ce nombre élevé de câbles rend l'installation complexe et les tests de commande particulièrement longs. En outre l'utilisation de plus en plus fréquente de matériaux composites au lieu de métal dans les aéronefs rend les câbles de commande de vol plus sensibles à la foudre et aux perturbations électromagnétiques, d'autant que les câbles peuvent être particulièrement longs. Ceci impose de prévoir un blindage des câbles, voire un sur-blindage ainsi qu'une protection plus efficace de l'électronique du calculateur.

L'augmentation du nombre de câbles et de l'épaisseur des blindages grève le budget de masse de l'aéronef. Il conduit aussi à des harnais de plus grand diamètre qu'il est difficile de router à travers l'aéronef, en particulier dans les zones confinées, ce qui se traduit en contraintes de structure.

De la même façon, le surdimensionnement du calculateur, tant en termes de nombre d'entrées/ sorties que de protection électrique, impacte le budget de masse de l'aéronef et la taille de baie avionique.

L'objet de la présente invention est de proposer un système de commande de vol robuste et remédiant aux inconvénients précités, en particulier ne nécessitant ni de recourir à un câblage important ni à un blindage de protection électromagnétique contraignant.

### EXPOSÉ DE L'INVENTION

La présente invention est définie par un système de commande de vol pour aéronef, destiné à commander une pluralité d'actionneurs adaptés à actionner des gouvernes du dit aéronef, ledit système comprenant :
- au moins un bus de communication ;
- au moins un calculateur situé dans la baie avionique de l'aéronef, adapté à calculer des commandes de vol et à les transmettre sur ledit bus sous forme de messages de commande ;
- au moins un premier terminal distant relié au dit bus, adapté à contrôler un actionneur de gouverne et à acquérir l'état de cet actionneur à partir d'informations fournies par au moins un premier capteur équipant ce dernier, ledit premier terminal recevant des messages de commande du calculateur et transmettant à l'actionneur des ordres électriques en fonction des messages de commande ainsi reçus, et transmettant, d'autre part, au calculateur, sur requête de ce dernier, des messages relatifs à l'état du dit actionneur en fonction des informations fournies par ledit premier capteur.

Selon un mode avantageux de réalisation le bus est constitué d'un paire torsadée alimentée en différentiel, les échanges sur le bus étant effectués en mode half-duplex et selon un protocole de type maître-esclave.

Le système peut comprendre en outre au moins un second terminal distant relié au dit bus et adapté à acquérir l'état d'une gouverne à partir d'informations fournies par un second capteur équipant cette dernière, et adapté en outre à transmettre au calculateur et sur requête de ce dernier, des messages relatifs à l'état de cette gouverne en fonction d'informations fournies par ledit second capteur.

Le premier terminal peut être également adapté à acquérir l'état d'une gouverne opérée par ledit actionneur à partir d'informations fournies par au moins un second capteur équipant cette dernière, et adapté en outre à transmettre au calculateur et sur requête de ce dernier, des messages relatifs à l'état de cette gouverne en fonction d'informations fournies par ledit second capteur.

Selon une première variante, ledit calculateur comprend :
- une première voie (COM) destinée à calculer des commandes de vol, à les transmettre sous forme de messages de commande à une pluralité de dits premiers terminaux et à recevoir des accusés de réception de ces terminaux, ainsi qu'à leur transmettre des requêtes pour obtenir en retour les états respectifs des actionneurs contrôlés par ces terminaux et des gouvernes opérées par ces actionneurs ;
- une seconde voie (MON) destinée à calculer des commandes de vol et à les transformer en messages de commande, à écouter et enregistrer les messages transitant sur le bus, en provenance et à destination de ladite première voie ;
- les messages de commande de la première voie étant comparés à ceux de la seconde voie.

Selon une seconde variante, le système comporte un bus unique et ledit calculateur comprend :
- une première voie (COM), destinée à calculer des commandes de vol, à les transmettre sous forme de messages de commande à une pluralité des dits premiers terminaux et à recevoir des accusés de réception de ces terminaux, ainsi qu'à leur transmettre des requêtes pour obtenir en retour les états respectifs des actionneurs contrôlés par ces terminaux et des gouvernes opérées par ces actionneurs, ladite première voie étant connectée au dit bus par une liaison contrôlée au moyen d'un contrôleur de bus (BC) ;
- une seconde voie (MON), connectée au dit contrôleur, et destinée à calculer des commandes de vol et à les transformer en messages de commande, à écouter et enregistrer les messages émis et reçus par ledit contrôleur, en provenance et à destination de ladite première voie ;
- les messages de commande de la première voie étant comparés à ceux de la seconde voie.

Selon une troisième variante, le système comporte un bus unique et ledit calculateur comprend :
- une première voie (COM), destinée à calculer des commandes de vol, à les transmettre sous forme de messages de commande à une pluralité des dits premiers terminaux et à recevoir des accusés de réception de ces terminaux, ainsi qu'à leur transmettre des requêtes pour obtenir en retour les états respectifs des actionneurs contrôlés par ces terminaux et des gouvernes opérées par ces actionneurs, ladite première voie étant connectée au dit bus par une liaison contrôlée au moyen d'un contrôleur de bus (BC) ;
- une seconde voie (MON), connectée à ladite première voie, et destinée à calculer des commandes de vol et à les transformer en messages de commande, à recevoir les messages en provenance et à destination de ladite première voie, relayés par celle-ci à la seconde voie ;
- les messages de commande de la première voie étant comparés à ceux de la seconde voie.

Le premier terminal comprend avantageusement :
- une première voie (COM) destinée à recevoir les messages de commande du dit calculateur, à en accuser réception et à transmettre des ordres électriques à l'actionneur contrôlé par ce terminal ;
- une seconde voie (MON) destinée à recevoir des requêtes du dit calculateur et à retourner des messages relatifs à l'état du dit actionneur et/ou à l'état d'une gouverne opérée par ce dernier.

De préférence, lesdites première et seconde voies du calculateur ainsi que lesdites première et seconde voies du premier terminal sont reliées à un bus unique.

La première voie du calculateur peut comprendre un contrôleur de bus (BC) en série avec un émetteur/récepteur (Tc) et un transformateur (Tf) assurant le couplage avec le bus, la seconde voie du calculateur comprend un module de surveillance (BM) en série avec un émetteur/récepteur (Tc) et un transformateur (Tf) assurant le couplage avec le bus, et que les première et seconde voies du premier terminal comprennent chacune un module de contrôle (RT) en série avec un émetteur/récepteur (Tc) et un transformateur (Tf) assurant le couplage avec le bus.

Alternativement, lesdites premières voies du calculateur et du premier terminal sont reliées à un premier bus et lesdites secondes voies du calculateur et du premier terminal sont reliées à un second bus.

Dans ce cas, lesdites première et seconde voies du calculateur comprennent chacune un contrôleur de bus (BC) en série avec un émetteur/récepteur (Tc) et un transformateur (Tf) assurant le couplage respectivement avec le premier et le second bus, et les première et seconde voies du premier terminal comprennent chacune un module de contrôle (RT) en série avec un émetteur/récepteur (Tc) et un transformateur (Tf) assurant le couplage respectivement avec le premier et le second bus.

Encore alternativement, la première voie comprend un contrôleur de bus en série avec deux premières branches en parallèle, chaque première branche comprenant un émetteur/récepteur en série avec un transformateur pour assurer respectivement un couplage avec un premier bus et un second bus, la seconde voie comprend un module de surveillance en série avec deux secondes branches en parallèle, chaque seconde branche comprenant un récepteur en série avec un transformateur pour assurer respectivement un couplage avec ledit premier et ledit second bus, et les première et seconde voies du premier terminal comprennent chacune un module de contrôle en série avec deux troisièmes branches en parallèle, chaque troisième branche comprenant un émetteur/récepteur en série avec un transformateur pour assurer respectivement un couplage avec ledit premier et ledit second bus.

L'invention concerne enfin un aéronef comportant une pluralité de gouvernes adaptées à être opérées par des actionneurs, ainsi qu'un système de commande de vol exposé ci-dessus.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
La Fig. 1 illustre schématiquement un système de commande de vol connu de l'état de la technique ;
Les Figs. 2A à 2C illustrent schématiquement un système de commande de vol selon trois variantes d'un premier mode de réalisation de l'invention ;
La Fig. 3 représente un système de commande de vol selon un second mode de réalisation de l'invention.
La Fig. 4 représente un système de commande de vol selon un troisième mode de réalisation de l'invention ;
La Fig. 5 représente schématiquement un système de commande selon un quatrième mode de réalisation de l'invention ;
La Fig. 6 représente schématiquement un système de commande selon un cinquième mode de réalisation de l'invention ;
La Fig. 7 représente le détail de la liaison entre une voie d'un calculateur ou un terminal distant et un bus.

### EXPOSÉ DÉTAILLÉ DE MODES DE RÉALISATION PARTICULIERS

L'idée à la base de l'invention est d'utiliser un système de commande de vol distribué, organisé autour d'un bus de communication multiplexé, et dans lequel les fonctions de contrôle et certaines fonctions de surveillance sont déportées au niveau des actionneurs.

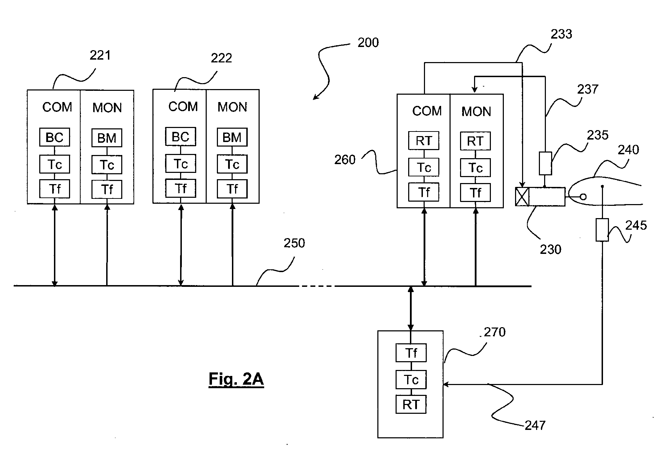

La Fig. 2A représente un système de commande de vol, 200, selon un premier mode de réalisation de l'invention. Il comprend un premier calculateur de commande de vol, 221, dit calculateur primaire, et un second calculateur de commande de vol, 222, dit calculateur secondaire. Les calculateurs primaire et secondaire possèdent la même structure et sont situés dans la baie avionique de l'aéronef. En pratique, le système de commande de vol comprend généralement au moins deux couples de calculateurs primaire et secondaire, un premier couple étant situé sur le côté gauche et un second couple étant sur le côté droit de l'aéronef, assurant ainsi une redondance physique de la commande des gouvernes. Les calculateurs primaire et secondaire sont reliés aux organes de pilotage et/ou au pilote automatique comme dans l'art antérieur. Les calculateurs primaire et secondaire reçoivent les informations de position/orientation de ces organes grâce aux capteurs qui les équipent (non représentés).

Chaque calculateur comprend deux voies : une première voie, dite voie COM, et une seconde voie, dite voie MON.

En mode de fonctionnement normal, c'est-à-dire lorsque le calculateur primaire n'est pas affecté par une panne, sa voie COM écoute et contrôle le bus. Plus précisément, elle transmet des messages de commande aux terminaux abonnés au bus 250 et reçoit en retour des messages d'information ou de confirmation, comme détaillé plus loin. La voie MON, quant à elle, écoute simplement le bus et vérifie la cohérence entre les messages de commande envoyés par la voie COM et les messages d'information ou de confirmation qui sont retournés à cette dernière par les différents terminaux. En d'autres termes sa fonction est de surveiller le bon fonctionnement de la voie COM. La voie MON utilise de préférence un algorithme de calcul distinct de celui de la voie MON de manière à pouvoir éviter les erreurs systématiques qui pourraient intervenir dans les deux voies. Les voies COM et MON du calculateur secondaire jouent les mêmes rôles que les voies COM et MON du calculateur primaire. Toutefois, en fonctionnement normal, l'émission de la voie COM du calculateur secondaire sur le bus 250 est inhibée.

Si un dysfonctionnement affecte la voie COM du calculateur primaire, sa voie MON le détecte et désactive ce calculateur. Simultanément, le calculateur secondaire est activé, c'est-à-dire que le contrôle du bus par la voie COM du calculateur secondaire est désinhibée. Etant donné que la voie COM du calculateur secondaire effectuait les calculs en parallèle avec le calculateur primaire préalablement à la panne, il n'est pas nécessaire de récupérer les états respectifs de tous les actionneurs et gouvernes. La reprise sur une défaillance du calculateur primaire est par conséquent immédiate.

Une voie COM du calculateur primaire ou du calculateur secondaire comprend un contrôleur de bus, noté BC (*Bus Controller*) permettant un accès bidirectionnel au bus, un émetteur/récepteur, noté Tc (*Transceiver*), et un transformateur, noté Tf, assurant le couplage avec le bus 250. De manière similaire, une voie MON du calculateur primaire ou du calculateur secondaire comprend un module de surveillance, noté BM (*Bus Monitor*) permettant un accès unidirectionnel (en réception seulement), un émetteur/récepteur, Tc, (fonctionnant uniquement en récepteur dans cette configuration) et un transformateur, Tf, assurant le couplage avec le bus 250. On comprendra que si le calculateur secondaire 222 est activé suite à une panne du calculateur primaire, le module de surveillance (BM) de la voie COM du calculateur secondaire est reconfiguré en module de contrôle (BC).

Le bus 250 est un bus série numérique et multiplexé. Par bus numérique on entend que les signaux transitant sur le bus peuvent prendre deux états, par exemple des signaux bipolaires traduisant des valeurs binaires. Par multiplexé, on entend que les messages sont transmis sur le bus selon un schéma de multiplexage temporel. En pratique le bus est réalisé au moyen d'une simple paire torsadée.

Selon un mode préférentiel de réalisation, les échanges de messages sur le bus 250 sont effectués en mode half-duplex et selon un protocole de communication déterministe de type maître-esclave. Plus précisément, en fonctionnement normal, le contrôleur de bus BC (*Bus Controller*) de la voie COM du calculateur primaire est maître du bus. Les échanges de messages sont nécessairement initiés par le maître du bus, un terminal distant ne pouvant émettre qu'en réponse à une invitation préalable du maître.

Le bus de communication 250 se présente avantageusement sous la forme d'une paire torsadée alimentée en différentiel, galvaniquement isolée de la masse et des potentiels d'alimentation. Cette dernière caractéristique confère au bus une grande insensibilité aux perturbations électromagnétiques, notamment celles causées par la foudre.

La norme MIL-STD-1553B définit un bus fonctionnant à la fois selon un protocole de type maître-esclave et possédant une alimentation différentielle. On trouvera par exemple une description de cette norme sur le site :
www-corot.obspm.fr/COROT-ETC/Files/1553_overview.pdf

Alternativement, le bus peut être conforme à la norme ARINC 629, qui préconise également un protocole de type maître-esclave et une alimentation différentielle.

Afin de se prémunir contre les erreurs de transmission, les messages transmis sur le bus 250 sont avantageusement codés au moyen d'un code de contrôle d'erreur ou CRC (*Cyclic Redundancy Code*), voire un code de correction d'erreur ou ECC (*Error Correcting Code*). Alternativement ou cumulativement, les messages seront signés au moyen d'une signature numérique. La signature numérique pourra être générée de manière connue en soi en appliquant une fonction de hachage (*hash*) au message à transmettre pour obtenir une empreinte numérique, cette empreinte étant ensuite encryptée à l'aide de la clé privée de l'émetteur, par exemple une clé privée appartenant à une infrastructure de clés asymétriques (PKI). Il sera ainsi possible au destinataire du message, en particulier à la voie MON d'un calculateur, de vérifier l'intégrité du message, c'est-à-dire de déterminer s'il a été ou non corrompu.

Le système de commande de vol 200 comprend en outre une pluralité de terminaux 260, chaque terminal 260 étant dédié au contrôle et à la surveillance d'un actionneur 230 particulier. Chaque terminal 260 comprend une première voie, dite voie COM, et une seconde voie, dite voie MON. La voie COM du terminal 260 reçoit des messages de commande du calculateur primaire (ou secondaire, si le calculateur primaire est défaillant) et transmet à l'actionneur 230 associé, via au moins un premier câble 233, un ordre de contrôle, par exemple une valeur de consigne de position ou de pression hydraulique. La voie MON du terminal fait l'acquisition, via au moins un second câble 237, d'informations relatives à l'état de l'actionneur, par exemple des informations de position, de pression, de température ou autre, fournie par un ou des capteur(s) équipant l'actionneur. Sur requête du calculateur primaire, la voie MON du terminal 260 renvoie vers la voie COM du calculateur des messages relatifs à l'état de l'actionneur. Les premier et second câbles sont relativement courts du fait de la proximité du terminal et de l'actionneur associé, ce qui réduit la quantité de câblage et diminue la sensibilité des signaux transmis aux perturbations électromagnétiques.

Les voies COM et MON d'un terminal 260 comprennent chacune un module de contrôle, noté RT (*Remote Terminal*), un émetteur/récepteur Tc et un transformateur Tf assurant un couplage avec le bus 250. Le module de contrôle RT de la voie COM contrôle l'envoi d'ordres électriques à l'actionneur, la réception de messages de commande en provenance de la voie COM du calculateur, ainsi que l'émission de messages de confirmation à destination de cette dernière. De manière similaire, le module RT de la voie MON contrôle la transmission de messages d'état en réponse à des requêtes du calculateur.

Le calculateur primaire 221 transmet successivement des messages de commande à destination des différents terminaux 260. Chaque terminal 260, plus précisément sa voie COM, recevant correctement un message de commande répond en retournant un accusé de réception au calculateur et plus précisément à la voie COM de ce dernier.

Lorsque le calculateur primaire souhaite connaître l'état d'un actionneur (par exemple sa position, sa pression, sa température etc.), sa voie COM transmet une requête au terminal 260 associé à cet actionneur, plus précisément à sa voie MON. Cette dernière répond à la voie COM du calculateur en transmettant un message d'information relatif à l'état de l'actionneur en question.

Selon le premier mode de réalisation de l'invention, le système de commande de vol comprend également une pluralité de terminaux 270, chaque terminal étant dédié à la surveillance d'une gouverne particulière 273. Chaque terminal 270 est relié à un capteur mesurant la position ou l'orientation angulaire de la gouverne associée, grâce à un câble relativement court, présentant les mêmes avantages que précédemment. Chaque terminal 270 comprend un module de contrôle RT, un module d'émission/réception Tc ainsi qu'un transformateur Tf assurant le couplage avec le bus 250.

Lorsque le calculateur primaire souhaite connaître l'état d'une gouverne (par exemple sa position ou son orientation angulaire), sa voie COM transmet une requête au terminal 270 associé à cette gouverne. Le terminal 270 lui répond en transmettant un message d'information relatif à l'état de la gouverne en question.

Le système de commande de vol selon l'invention est robuste aux différents types de pannes qui peuvent l'affecter.

En effet, lors d'un échange de messages entre le calculateur primaire et une pluralité de terminaux, la voie MON du calculateur écoute et enregistre les messages de commande envoyés par la voie COM du calculateur et les réponses des terminaux interrogés.

Si les messages de commande émis par la voie COM diffèrent des messages de commande écoutés par la voie MON, pour un nombre prédéterminé d'occurrences, on en conclut à une panne du contrôleur de bus BC ou du module de surveillance BM du calculateur primaire. Le calculateur primaire est alors désactivé et le calculateur secondaire est activé, autrement dit sa voie COM prend le contrôle du bus.

En dehors même de toute erreur détectée par comparaison entre les voies COM et MON du calculateur primaire, les messages reçus par un terminal 260 ou 270 peuvent avoir été affectés par des erreurs dues au bruit sur le bus. Celles-ci peuvent être détectées par le module RT au moyen du code CRC (par exemple un bit de parité), d'une vérification d'intégrité sur la base de la signature numérique du message, voire corrigées au moyen d'un code ECC présent dans le message. En outre, le calculateur primaire peut demander au terminal 260 ou 270, de lui retourner, en guise d'accusé de réception, le message de commande qui lui a transmis. Si le terminal primaire détecte une différence entre le message de commande transmis et l'accusé de réception pour un nombre prédéterminé d'occurrences, le terminal 260 défaillant est désactivé.

Plusieurs types de pannes peuvent affecter un terminal 260 associé à un actionneur.

Tout d'abord, la panne peut affecter sa voie COM. Selon un premier scénario de panne, le terminal 260 ne renvoie pas d'accusé de réception aux messages que lui envoie le calculateur (primaire ou secondaire). Le contrôleur du bus BC du calculateur désactive alors le terminal défaillant après un nombre prédéterminé de tentatives de transmission infructueuses. Selon un second scénario de panne, le terminal 260 peut transmettre un ordre erroné à l'actionneur associé. Sa voie MON transmettra alors, sur requête du calculateur, un état de l'actionneur incohérent avec le message qui a été envoyé à sa voie COM. En outre, le terminal 270 qui suit la position/orientation de la gouverne manoeuvrée par cet actionneur transmettra une information incohérente avec la commande envoyée par le calculateur. Dans les deux cas, si une incohérence est détectée pour un nombre prédéterminé d'occurrences, le terminal 260 réputé défaillant est désactivé. Selon un troisième scénario de panne, la voie COM du terminal perturbe le bus en émettant des messages sur le bus de manière permanente ou incohérente (phénomène connu sous le nom de *babbling*). Si le calculateur primaire (ou secondaire) détecte un tel type d'émission, le terminal 260 défaillant est désactivé.

De la même façon, les trois scénarii de panne décrits plus haut s'appliquent de manière similaire à la voie MON du terminal 260. Premièrement, la voie MON peut ne pas répondre aux requêtes du calculateur. Si la voie COM du calculateur ne reçoit pas de réponse pour un nombre prédéterminé d'occurrences, le terminal 260 est désactivé. Deuxièmement, la voie MON du terminal peut transmettre un état d'actionneur erroné. Si la voie COM du calculateur détecte une incohérence entre le message de commande et l'état de l'actionneur, le terminal 260 est désactivé. Troisièmement, la voie COM peut perturber le bus en émettant des messages de manière permanente ou incohérente (*babbling*)*.* Si le calculateur primaire (ou secondaire) détecte un tel type d'émission, le terminal 260 défaillant est désactivé. De manière générale, afin de se prémunir contre l'envoi de messages intempestifs ou contre une interférence entre messages, il est envisagé que chaque voie (COM ou MON) d'un terminal 260 signe ses messages avec une signature distincte. Ainsi, le calculateur (primaire ou secondaire) pourra aisément authentifier l'émetteur du message et vérifier son intégrité.

La désactivation d'un terminal 260 se traduit par le passage de l'actionneur associé, 230, en mode amorti (ou passif). Une gouverne 240 étant généralement manoeuvrée par une pluralité d'actionneurs, les actionneurs adjacents à celui placé en mode amorti, prennent alors le relais de ce dernier. La désactivation du terminal 260 peut être simplement réalisée en coupant son alimentation, le cas échéant via un bus de terrain (non représenté).

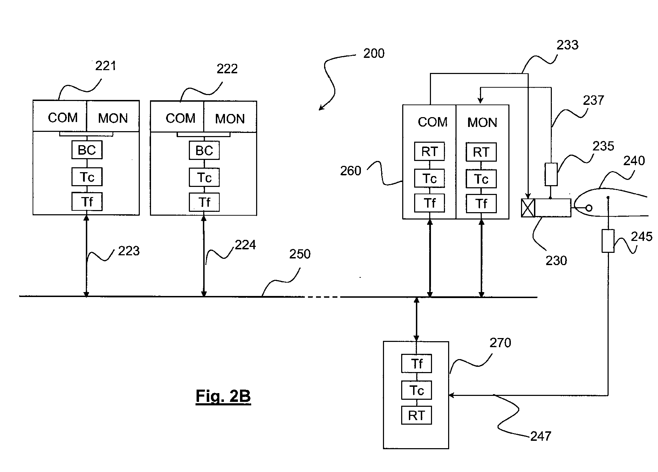

La Fig. 2B représente un système de commande de vol 200 selon une seconde variante du premier mode de réalisation de l'invention.

Cette variante diffère de celle de la Fig. 2A par la structure des calculateurs primaire et secondaire. Dans cette structure, le contrôleur de bus BC est commun aux deux voies MON et COM d'un calculateur. Chaque calculateur 221, 222 est alors relié au bus 250 par l'intermédiaire d'une liaison unique, référencée respectivement 223, 224. Selon cette variante, la surveillance de la voie COM par la voie MON n'est plus effectuée directement au niveau des messages transitant sur le bus mais au niveau des messages émis par et reçus du contrôleur commun BC.

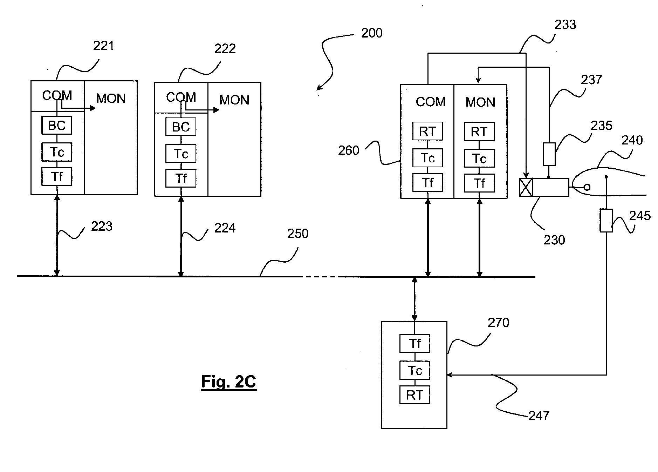

La Fig. 2C représente un système de commande de vol 200 selon une troisième variante du premier mode de réalisation de l'invention.

Comme dans la seconde variante, chaque calculateur comprend un contrôleur de bus BC unique. Toutefois, celui-ci n'est plus partagé entre les voies COM et MON mais est dédié à la voie COM. La liaison avec le bus 250 est réalisée comme précédemment à l'aide d'une liaison unique 223, 224. Selon cette variante, la surveillance de la voie COM par la voie MON n'est pas effectuée au niveau des messages transitant sur le bus mais au niveau des messages émis et reçus par le contrôleur BC, convertis numériquement par la voie COM et relayés à la voie MON.

Alors que dans la première variante, le blocage du contrôleur BC pourra être détecté par la voie MON, du fait que le module de surveillance BM détecterait alors toujours le même message émis sur le bus, ce diagnostic ne sera pas plus possible avec les seconde et troisième variantes. Pour pallier cet inconvénient, il est proposé que la voie COM signe numériquement ses messages à l'aide d'une clé évoluant dans le temps selon une loi prédéterminée connue à la fois de COM et de MON. Ainsi, si le même message accompagné de la même signature est constamment transmis par le contrôleur, le module de surveillance MON en déduira que le contrôleur BC est défaillant.

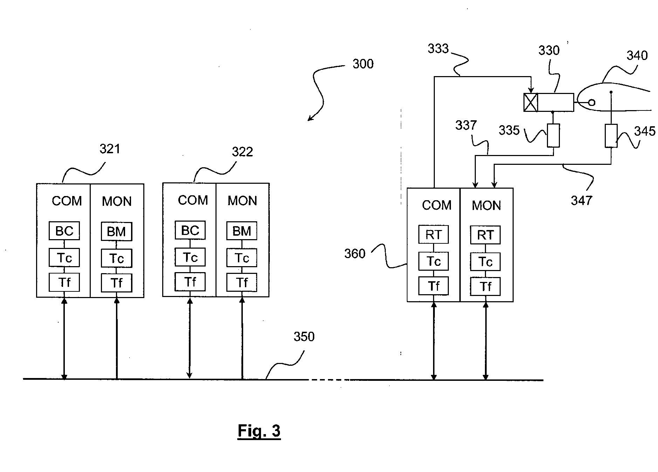

La Fig. 3 représente un système de commande de vol 300 selon un second mode de réalisation de l'invention. Les signes de référence désignant les mêmes objets qu'en figures 2A-2C sont incrémentés de 100.

Dans ce mode de réalisation, les terminaux 360 regroupent les fonctions assurées par les terminaux 260 et 270 du premier mode de réalisation. En d'autres termes, les terminaux 360 sont destinés au contrôle et à la surveillance des actionneurs, d'une part, et à la surveillance des gouvernes, d'autre part. La voie COM du terminal 360 remplit une fonction identique à celle de la voie COM du terminal 260. En revanche, la voie MON du terminal acquiert non seulement des informations relatives à l'état de l'actionneur 330 (position, pression hydraulique etc.) mais également des informations relatives à l'état de la gouverne 340 opérée par l'actionneur (sa position ou son orientation angulaire). Sur requête du calculateur primaire (ou secondaire), la voie MON transmet des messages relatifs à l'état de l'actionneur ou à l'état de la gouverne.

La voie COM du terminal est reliée par un premier câble 333 pour transmettre les ordres électriques à l'actionneur. La voie MON est reliée, par un second câble 337, à au moins un capteur 335 de l'actionneur et, par un troisième câble, 347, à un capteur 345 de position/orientation de la gouverne. Les trois câbles 333, 337, 347 sont de longueur relativement courte du fait de la proximité du terminal et de l'ensemble actionneur-gouverne, d'où un câblage peu important et une faible sensibilité aux perturbations électromagnétiques.

Le second mode de réalisation, comme le premier, peut être décliné en première, ^{®} seconde et troisième variantes, selon la structure des calculateurs primaire et secondaire déjà exposée plus haut.

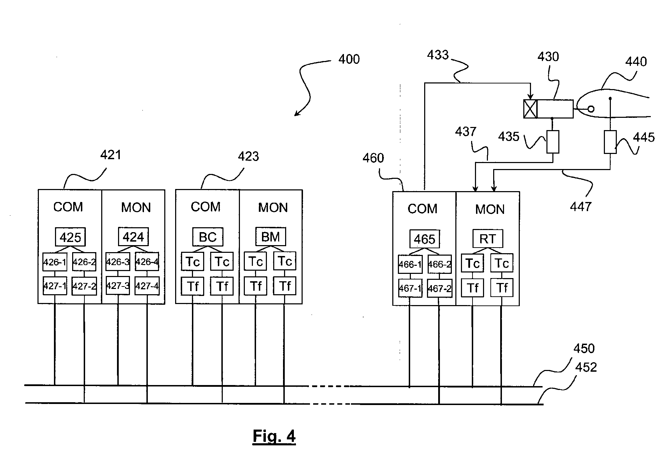

La Fig. 4 représente un système de commande de vol selon une troisième mode de réalisation de l'invention.

Dans ce mode de réalisation, chacune des voies COM et MON des calculateurs primaire et secondaire, ainsi que des terminaux distants est doublée et chacune des voies élémentaires est reliée à un bus distinct. Plus précisément, le système de commande de vol, 400, comprend un premier bus, 450, et un second bus, 452, par exemple conformes à la norme MIL-STD-1553B. Les bus 450 et 452 jouent le même rôle que le bus 250 en Fig. 2A.

La voie COM du calculateur primaire 421 comprend un contrôleur de bus BC, 425, relié à un premier émetteur/récepteur, 426-1, et un second émetteur/récepteur, 426-2, fonctionnant en parallèle, chaque émetteur/récepteur étant relié à un transformateur 427-1, 427-2 assurant respectivement le couplage avec le premier et le second bus. De manière similaire, la voie MON du calculateur primaire comprend un module de surveillance BM, 424, relié à un premier émetteur/récepteur, 426-3, et un second émetteur/récepteur, 426-4, chaque émetteur/récepteur étant relié à un transformateur 427-3, 427-4 assurant respectivement le couplage avec le premier et le second bus. La structure du calculateur secondaire est analogue à celle du calculateur primaire, à la différence près que sa voie COM peut être inhibée en émission sur le bus 450. Enfin, la voie COM d'un terminal 460, contrôlant un actionneur 430, comprend un module de contrôle RT, 465, relié à un premier émetteur/récepteur 466-1 et à un second émetteur/récepteur 466-2, chaque émetteur/récepteur étant respectivement relié à un transformateur 467-1 et 467-2 assurant le couplage avec le premier et le second bus. La voie MON, surveillant l'état de l'actionneur et celui de la gouverne, est dupliquée de la même façon.

Selon une variante non représentée, le système 400 peut comprendre, comme dans le second mode de réalisation, des terminaux distants dédiés à la surveillance des gouvernes (cf. terminal 270 en Fig. 2A). Chacun de ses terminaux comprendra alors un module de contrôle RT, relié à un premier émetteur/récepteur et un second émetteur récepteur, chaque émetteur/récepteur étant lui-même relié à un transformateur assurant le couplage avec le premier et le second bus.

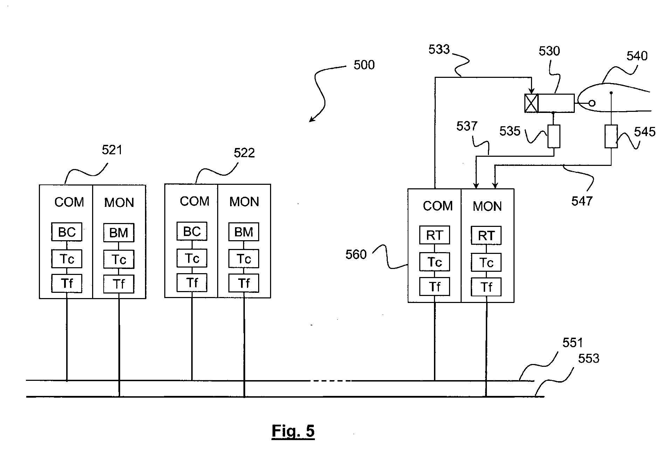

La Fig. 5 représente schématiquement un système de commande de vol selon un quatrième mode de réalisation de l'invention.

Ce mode de réalisation diffère des premier et second modes de réalisation en ce qu'il comprend un premier bus, 551, dédié à la voie COM et un second bus distinct, 553, dédié à la voie MON. En d'autres termes, le premier bus est utilisé pour le trafic des messages de commande du calculateur et les accusés de réception correspondants renvoyés par les différents terminaux, alors que le second bus est utilisé pour le trafic des requêtes du calculateur et les messages d'état d'actionneur ou de gouverne renvoyés par les différents terminaux.

On notera que les voies COM et MON du calculateur primaire ont des fonctions différentes de celles du premier mode. En effet, la voie COM se contente ici de transmettre les messages de commande aux différents terminaux et de recevoir les accusés de réception. La voie MON n'écoute pas et donc n'enregistre pas les messages émis ou à destination de la voie COM du calculateur. En revanche, elle transmet des requêtes aux terminaux distants 560 pour connaître les états des actionneurs et des gouvernes et reçoit en retour les messages d'état correspondants. Du fait qu'elle procède à l'interrogation des différents terminaux, la voie MON comprend un contrôleur de bus BC contrôlant le bus 553, au même titre que la voie COM dont le contrôleur de bus BC contrôle le bus 551.

Selon une variante non représentée, le système de commande de vol peut comprendre, comme dans le premier mode de réalisation, des terminaux dédiés à la surveillance.

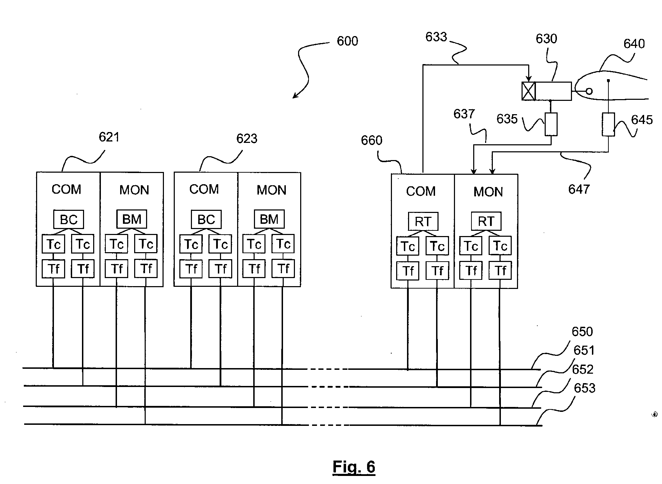

La Fig. 6 représente schématiquement un système de commande de vol selon un cinquième mode de réalisation de l'invention.

Ce mode de réalisation est une combinaison des troisième et quatrième modes de réalisation. Plus précisément, le système de commande de vol comprend ici deux voies COM et deux voies MON dupliquées, chaque voie COM élémentaire et chaque voie MON élémentaire disposant d'un bus distinct, à savoir les quatre bus 651, 652, 653 et 654.

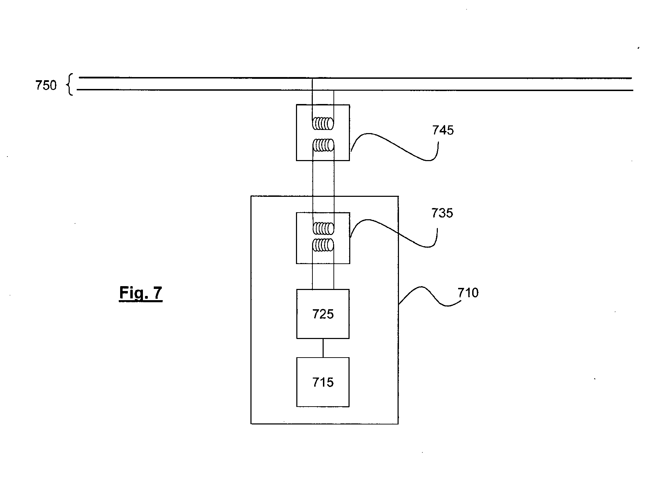

La Fig. 7 représente le détail de la liaison entre une voie COM ou MON d'un calculateur ou d'un terminal avec un bus. On rappelle que les seconde et troisième variantes des premier et second modes de réalisation, n'utilisent qu'une liaison commune entre un calculateur et le bus. Cette liaison est commune aux voies COM et MON dans la seconde variante, et dédiée à la voie COM, dans la troisième variante.

La voie 710 comprend, comme indiqué précédemment, un module de contrôle 715 (contrôleur de bus BC ou module de surveillance BM pour un calculateur, module de contrôle RT pour un terminal), un émetteur/récepteur 725 et un transformateur 735.

Le transformateur 735 permet de transformer le signal unipolaire en sortie de l'émetteur/récepteur en un signal bipolaire et réciproquement. Un second transformateur, 745, permet d'isoler la voie 710 du bus 750. On rappelle que le bus 750 est réalisé en pratique sous la forme d'une paire torsadée. Le transformateur 745 assure le découplage galvanique du calculateur ou du terminal vis-à-vis du bus. Ce montage a notamment pour avantage d'éviter aussi bien la propagation d'une tension continue élevée d'un actionneur sur le bus ainsi que la propagation en cascade d'un court-circuit sur ce bus. Il présente également une moindre sensibilité à la foudre qu'un montage sans découplage galvanique, ce qui est particulièrement avantageux pour les nouvelles générations d'aéronef, employant des matériaux composites et ne pouvant par conséquent faire office de cage de Faraday.

## Revendications

1. Système de commande de vol (200) pour aéronef, destiné à commander une pluralité d'actionneurs adaptés à actionner des gouvernes du dit aéronef, ledit système de commande de vol comprenant:
- au moins un bus (250) de communication ;
- au moins un calculateur (221) situé dans la baie avionique de l'aéronef, adapté à calculer des commandes de vol et à les transmettre sur ledit bus sous forme de messages de commande ;
- au moins un premier terminal (260) distant relié au dit bus, adapté à contrôler un actionneur de gouverne (230) et à acquérir l'état de cet actionneur (230) à partir d'informations fournies par au moins un premier capteur équipant ce dernier, ledit premier terminal recevant des messages de commande du calculateur et transmettant à l'actionneur des ordres électriques en fonction des messages de commande ainsi reçus, et transmettant, d'autre part, au calculateur, sur requête de ce dernier, des messages relatifs à l'état du dit actionneur en fonction des informations fournies par ledit premier capteur ;
ledit système de commande de vol étant **caractérisé en ce qu'**il comprend :
- au moins un second terminal (270) distant relié au dit bus et adapté à acquérir l'état d'une gouverne (273) à partir d'informations fournies par un second capteur équipant cette dernière, et adapté en outre à transmettre au calculateur et sur requête de ce dernier, des messages relatifs à l'état de cette gouverne en fonction d'informations fournies par ledit second capteur.

2. Système de commande de vol (300) pour aéronef, destiné à commander une pluralité d'actionneurs adaptés à actionner des gouvernes du dit aéronef, ledit système de commande de vol comprenant:
- au moins un bus de communication (250) ;
- au moins un calculateur situé dans la baie avionique de l'aéronef, adapté à calculer des commandes de vol et à les transmettre sur ledit bus sous forme de messages de commande ;
- au moins un premier terminal (360) distant relié au dit bus, adapté à contrôler un actionneur (330) de gouverne (340) et à acquérir l'état de cet actionneur à partir d'informations fournies par au moins un premier capteur (335) équipant ce dernier, ledit premier terminal recevant des messages de commande du calculateur et transmettant à l'actionneur des ordres électriques en fonction des messages de commande ainsi reçus, et transmettant, d'autre part, au calculateur, sur requête de ce dernier, des messages relatifs à l'état du dit actionneur en fonction des informations fournies par ledit premier capteur,
ledit système de commande de vol étant **caractérisé en ce que** le premier terminal est également adapté à acquérir l'état d'une gouverne opérée par ledit actionneur à partir d'informations fournies par au moins un second capteur (345) équipant cette dernière, et adapté en outre à transmettre au calculateur et sur requête de ce dernier, des messages relatifs à l'état de cette gouverne en fonction d'informations fournies par ledit second capteur.

3. Système de commande de vol pour aéronef selon la revendication 1 ou 2, **caractérisé en ce que** le bus est constitué d'un paire torsadée alimentée en différentiel, les échanges sur le bus étant effectués en mode half-duplex et selon un protocole de type maître-esclave.

4. Système de commande de vol, selon la revendication 1 ou 2, **caractérisé en ce que** ledit calculateur comprend :
- une première voie (COM) destinée à calculer des commandes de vol, à les transmettre sous forme de messages de commande à une pluralité des dits premiers terminaux et à recevoir des accusés de réception de ces terminaux, ainsi qu'à leur transmettre des requêtes pour obtenir en retour les états respectifs des actionneurs contrôlés par ces terminaux et des gouvernes opérées par ces actionneurs ;
- une seconde voie (MON) destinée à calculer des commandes de vol et à les transformer en messages de commande, à écouter et enregistrer les messages transitant sur le bus, en provenance et à destination de ladite première voie ;
- les messages de commande de la première voie étant comparés à ceux de la seconde voie.

5. Système de commande de vol, selon la revendication 1 ou 2, **caractérisé en ce que** le système comporte un bus unique et que ledit calculateur comprend :
- une première voie (COM), destinée à calculer des commandes de vol, à les transmettre sous forme de messages de commande à une pluralité des dits premiers terminaux et à recevoir des accusés de réception de ces terminaux, ainsi qu'à leur transmettre des requêtes pour obtenir en retour les états respectifs des actionneurs contrôlés par ces terminaux et des gouvernes opérées par ces actionneurs, ladite première voie étant connectée au dit bus par une liaison contrôlée au moyen d'un contrôleur de bus (BC) ;
- une seconde voie (MON), connectée au dit contrôleur, et destinée à calculer des commandes de vol et à les transformer en messages de commande, à écouter et enregistrer les messages émis et reçus par ledit contrôleur, en provenance et à destination de ladite première voie ;
- les messages de commande de la première voie étant comparés à ceux de la seconde voie.

6. Système de commande de vol, selon la revendication 1 ou 2, **caractérisé en ce que** le système comporte un bus unique et que ledit calculateur comprend :
- une première voie (COM), destinée à calculer des commandes de vol, à les transmettre sous forme de messages de commande à une pluralité des dits premiers terminaux et à recevoir des accusés de réception de ces terminaux, ainsi qu'à leur transmettre des requêtes pour obtenir en retour les états respectifs des actionneurs contrôlés par ces terminaux et des gouvernes opérées par ces actionneurs, ladite première voie étant connectée au dit bus par une liaison contrôlée au moyen d'un contrôleur de bus (BC) ;
- une seconde voie (MON), connectée à ladite première voie, et destinée à calculer des commandes de vol et à les transformer en messages de commande, à recevoir les messages en provenance et à destination de ladite première voie, relayés par celle-ci à la seconde voie ;
- les messages de commande de la première voie étant comparés à ceux de la seconde voie.

7. Système de commande de vol, selon l'une des revendications 4 à 6, **caractérisé en ce que** ledit premier terminal comprend :
- une première voie (COM) destinée à recevoir les messages de commande du dit calculateur, à en accuser réception et à transmettre des ordres électriques à l'actionneur contrôlé par ce terminal ;
- une seconde voie (MON) destinée à recevoir des requêtes du dit calculateur et à retourner des messages relatifs à l'état du dit actionneur et/ou à l'état d'une gouverne opérée par ce dernier.

8. Système de commande de vol, selon la revendication 7 en dépendance de la revendication 4, **caractérisé en ce que** lesdites première et seconde voies du calculateur ainsi que lesdites première et seconde voies du premier terminal sont reliées à un bus unique.

9. Système de commande de vol selon la revendication 8, **caractérisé en ce que** la première voie du calculateur comprend un contrôleur de bus (BC) en série avec un émetteur/récepteur (Tc) et un transformateur (Tf) assurant le couplage avec le bus, la seconde voie du calculateur comprend un module de surveillance (BM) en série avec un émetteur/récepteur (Tc) et un transformateur (Tf) assurant le couplage avec le bus, et que les première et seconde voies du premier terminal comprennent chacune un module de contrôle (RT) en série avec un émetteur/récepteur (Tc) et un transformateur (Tf) assurant le couplage avec le bus.

10. Système de commande de vol, selon la revendication 7 en dépendance de la revendication 4, **caractérisé en ce que** lesdites premières voies du calculateur et du premier terminal sont reliées à un premier bus (551) et que lesdites secondes voies du calculateur et du premier terminal sont reliées à un second bus (553).

11. Système de commande de vol, selon la revendication 10, **caractérisé en ce que** lesdites première et seconde voies du calculateur comprennent chacune un contrôleur de bus (BC) en série avec un émetteur/récepteur (Tc) et un transformateur (Tf) assurant le couplage respectivement avec le premier et le second bus, et que les première et seconde voies du premier terminal comprennent chacune un module de contrôle (RT) en série avec un émetteur/récepteur (Tc) et un transformateur (Tf) assurant le couplage respectivement avec le premier et le second bus.

12. Système de commande de vol, selon la revendication 7 en dépendance de la revendication 4, **caractérisé en ce que** la première voie comprend un contrôleur de bus (425) en série avec deux premières branches en parallèle, chaque première branche comprenant un émetteur/récepteur (426-1, 426-2) en série avec un transformateur (427-1, 427-2) pour assurer respectivement un couplage avec un premier bus (450) et un second bus (452), que la seconde voie comprend un module de surveillance (424) en série avec deux secondes branches en parallèle, chaque seconde branche comprenant un récepteur (426-3, 426-4) en série avec un transformateur (427-3, 427-4) pour assurer respectivement un couplage avec ledit premier et ledit second bus, et que les première et seconde voies du premier terminal comprennent chacune un module de contrôle (465) en série avec deux troisièmes branches en parallèle, chaque troisième branche comprenant un émetteur/récepteur (466-1, 466-2) en série avec un transformateur (467-1, 467-2) pour assurer respectivement un couplage avec ledit premier et ledit second bus.

13. Aéronef comprenant une pluralité de gouvernes adaptées à être opérées par des actionneurs, **caractérisé en ce qu'**il comprend un système de commande de vol selon l'une des revendications précédentes.

## Claims

1. A flight control system (200) for an aircraft, for controlling a plurality of actuators adapted to actuate control surfaces of said aircraft, said flight control system comprising:
• at least one communications bus (250);
• at least one computer (221) situated in the avionics bay of the aircraft, and adapted to calculate flight commands and to transmit them over said bus in the form of command messages;
• at least a first remote terminal (260) connected to said bus, adapted to control a control surface actuator (230), and to acquire the state of said actuator from information provided by at least a first sensor fitted thereto, said first terminal receiving command messages from the computer and transmitting electrical orders to the actuator as a function of the command messages thus received, and also transmitting messages to the computer, at the request thereof, relating to the state of the actuator as a function of the information provided by said first sensor;
said flight control system being **characterized in that** it comprises at least one second remote terminal (270) connected to said bus and adapted to acquire the state of a control surface (273) from information provided by a second sensor fitted thereto, and also adapted to transmit messages to the computer, at the request thereof, relating to the state of said control surface as a function of information provided by said second sensor.

2. A flight control system (300) for an aircraft, for controlling a plurality of actuators adapted to actuate control surfaces of said aircraft, said flight control system comprising:
• at least one communications bus (250);
• at least one computer situated in the avionics bay of the aircraft, and adapted to calculate flight commands and to transmit them over said bus in the form of command messages;
• at least a first remote terminal (360) connected to said bus, adapted to control a control surface actuator (330), and to acquire the state of said actuator from information provided by at least a first sensor (335) fitted thereto, said first terminal receiving command messages from the computer and transmitting electrical orders to the actuator as a function of the command messages received in this way, and also transmitting messages to the computer, at its request, relating to the state of the actuator as a function of the information provided by said first sensor;
said flight control system being **characterized in that** the first terminal is also adapted to acquire the state of a control surface moved by said actuator from information provided by at least one second sensor (345) fitted thereto, and also being adapted to transmit messages to the computer, at the request thereof, relating to the state of said control surface as a function of information provided by said second sensor.

3. An aircraft flight control system according to claim 1 or claim 2, **characterized in that** the bus is constituted by a differentially-powered twisted pair, exchanges over the bus being performed in half-duplex mode and using a master-slave type protocol.

4. A flight control system according to claim 1 or claim 2, **characterized in that** said computer comprises:
• a first channel (COM) for computing flight commands, for sending them in the form of command messages to a plurality of said first terminals, and for receiving acknowledgments of receipt from the terminals and also for sending requests to the terminals in order to obtain in return the respective states of the actuators controlled by the terminals and of the control surfaces moved by the actuators; and
• a second channel (MON) serving to calculate flight commands and to transform them into command messages, and to listen to and to record the messages passing over the bus, coming from and going to said first channel;
• the command messages of the first channel being compared with the command messages of the second channel.

5. A flight control system according to claim 1 or claim 2, **characterized in that** the system has a single bus and said computer comprises:
• a first channel (COM) for computing flight commands, for sending them in the form of command messages to a plurality of said first terminals, and for receiving acknowledgments of receipt from the terminals and also for sending requests to the terminals in order to obtain in return the respective states of the actuators controlled by the terminals and of the control surfaces moved by the actuators, said first channel being connected to said bus via a connection that is controlled by means of a bus controller (BC); and
• a second channel (MON), connected to said controller, and serving to calculate flight commands and to transform them into command messages, and to listen to and to record the messages transmitted and received from said controller, coming from and going to said first channel;
• the command messages of the first channel being compared with the command messages of the second channel.

6. A flight control system according to claim 1 or claim 2, **characterized in that** the system has a single bus and said computer comprises:
• a first channel (COM) for computing flight commands, for sending them in the form of command messages to a plurality of said first terminals, and for receiving acknowledgments of receipt from the terminals and also for sending requests to the terminals in order to obtain in return the respective states of the actuators controlled by the terminals and of the control surfaces moved by the actuators, said first channel being connected to said bus via a connection that is controlled by means of a bus controller (BC); and
• a second channel (MON) connected to said first channel and serving to calculate flight commands and to transform them into command messages, to receive messages from and to said first channel, relayed thereby to the second channel; and
• the command messages of the first channel being compared with the command messages of the second channel.

7. A flight control system according to any one of claims 4 to 6, **characterized in that** said first terminal comprises:
• a first channel (COM) for receiving command messages from said computer, for acknowledging receipt thereof, and for transmitting electrical orders to the actuator controlled by said terminal; and
• a second channel (MON) for receiving requests from said computer and for returning messages relating to the state of said actuator and/or the state of a control surface moved thereby.

8. A flight control system according to claim 7 as dependent on claim 4, **characterized in that** said first and second channels of the computer and said first and second channels of the first terminal are connected to a single bus.

9. A flight control system according to claim 8, **characterized in that** the first channel of the computer has a bus controller (BC) in series with a transceiver (Tc) and a transformer (Tf) providing coupling with the bus, the second channel of the computer comprises a bus monitor module (BM) in series with a transceiver (Tc), and a transformer (Tf) providing coupling with the bus, and each of the first and second channels of the first terminal comprises a control module (RT) in series with a transceiver (Tc) and a transformer (Tf) providing coupling with the bus.

10. A flight control system according to claim 7 as depending on claim 4, **characterized in that** said first channels of the computer and of the first terminal are connected to a first bus (551) and said second channels of the computer and of the first terminal are connected to a second bus (553).

11. A flight control system according to claim 10, **characterized in that** each of said first and second channels of the computer comprises a bus controller (BC) in series with a transceiver (Tc) and a transformer (Tf) providing coupling with the first and second buses, respectively, and each of the first and second channels of the first terminal comprises a control module (RT) in series with a transceiver (Tc) and a transformer (Tf) providing coupling with the first and second buses, respectively.

12. A flight control system according to claim 7 as dependent on claim 4, **characterized in that** the first channel comprises a bus controller (425) in series with two first branches in parallel, each first branch comprising a transceiver (426-1, 426-2) in series with a transformer (427-1, 427-2) for coupling respectively with a first bus (450) and with a second bus (452), the second channel comprises a monitor module (424) in series with two second branches in parallel, each second branch comprising a receiver (426-3, 462-4) in series with a transformer (427-3, 427-4) for providing coupling with said first and second buses, respectively, and each of the first and second channels of the first terminal comprises a control module (465) in series with two third branches in parallel, each third branch comprising a transceiver (466-1, 466-2) in series with a transformer (467-1, 467-2) for providing coupling with said first and second buses, respectively.

13. An aircraft having a plurality of control surfaces adapted to be operates by actuators, the aircraft being **characterized in that** it includes a flight control system according to any preceding claim.

## Patentansprüche

1. Flugsteuerungssystem (200) für ein Luftfahrzeug, das dazu ausgelegt ist, eine Mehrzahl von Betätigungsgeräten zu steuern, die dazu ausgelegt sind, Ruder des Luftfahrzeugs zu betätigen, wobei das Flugsteuerungssystem umfasst:
- wenigstens einen Kommunikationsbus (250);
- wenigstens einen Rechner (221), der in dem Avionikschrank des Luftfahrzeugs angeordnet und dazu ausgelegt ist, Flugsteuerbefehle zu berechnen und sie auf dem Bus in Form von Steuerbefehlsnachrichten zu übertragen;
- wenigstens ein mit dem Bus verbundenes beabstandetes erstes Terminal (260), das dazu ausgelegt ist, ein Ruder-Betätigungsgerät (230) zu kontrollieren und den Zustand dieses Betätigungsgeräts (230) ausgehend von Informationen zu erhalten, die von wenigstens einem ersten Sensor geliefert werden, mit dem Letzteres ausgestattet ist, wobei das erste Terminal Steuerbefehlsnachrichten vom Rechner empfängt und an das Betätigungsgerät elektrische Befehle als Funktion der derart empfangenen Steuerbefehlsnachrichten überträgt, und andererseits an den Rechner auf Anfrage dieses Letztgenannten Nachrichten betreffend den Zustand des Betätigungsgeräts als Funktion der Informationen überträgt, die von dem ersten Sensor geliefert werden;
wobei das Flugsteuerungssystem **dadurch gekennzeichnet ist, dass** es umfasst:
- wenigstens ein beabstandetes zweites Terminal (270), das mit dem Bus verbunden und dazu ausgelegt ist, den Zustand eines Ruders (273) ausgehend von Informationen zu erhalten, die von einem zweiten Sensor geliefert werden, mit dem dieses Letztgenannte ausgestattet ist, und ferner dazu ausgelegt ist, an den Rechner und auf dessen Anfrage hin Nachrichten betreffend den Zustand dieses Ruders als Funktion von Informationen zu übertragen, die von dem zweiten Sensor geliefert werden.

2. Flugsteuerungssystem (300) für ein Luftfahrzeug, das dazu ausgelegt ist, eine Mehrzahl von Betätigungsgeräten zu steuern, die dazu ausgelegt sind, Ruder des Luftfahrzeugs zu betätigen, wobei das Flugsteuerungssystem umfasst:
- wenigstens einen Kommunikationsbus (250);
- wenigstens einen Rechner, der in dem Avionikschrank des Luftfahrzeugs angeordnet und dazu ausgelegt ist, Flugsteuerbefehle zu berechnen und sie auf dem Bus in Form von Steuerbefehlsnachrichten zu übertragen;
- wenigstens ein mit dem Bus verbundenes beabstandetes erstes Terminal (360), das dazu ausgelegt ist, ein Betätigungsgerät (330) eines Ruders (340) zu kontrollieren und den Zustand dieses Betätigungsgeräts ausgehend von Informationen zu erhalten, die von wenigstens einem ersten Sensor (335) geliefert werden, mit dem dieses Letztgenannte ausgestattet ist, wobei das erste Terminal Steuerbefehlsnachrichten vom Rechner empfängt und an das Betätigungsgerät elektrische Befehle als Funktion der derart empfangenen Steuerbefehlsnachrichten überträgt, und andererseits an den Rechner auf Anfrage dieses Letztgenannten Nachrichten betreffend den Zustand des Betätigungsgeräts als Funktion der Informationen überträgt, die von dem ersten Sensor geliefert werden,
wobei das Flugsteuerungssystem **dadurch gekennzeichnet ist, dass** das erste Terminal ebenfalls dazu ausgelegt ist, den Zustand eines durch das Betätigungsgerät betriebenen Ruders ausgehend von Informationen zu erhalten, die von wenigstens einem zweiten Sensor (345) geliefert werden, mit dem dieses Letztgenannte ausgestattet ist, und ferner dazu ausgelegt ist, an den Rechner und auf Anfrage dieses Letztgenannten hin Nachrichten betreffend den Zustand dieses Ruders als Funktion von Informationen zu übertragen, die von dem zweiten Sensor geliefert werden.

3. Flugsteuerungssystem für ein Luftfahrzeug nach Anspruch 1 oder 2, **dadurch gekennzeichnet, dass** der Bus durch eine differenziell versorgte verdrillte Doppelleitung gebildet ist, wobei der Datenaustausch auf dem Bus im Halb-Duplex-Modus und gemäß einem Protokoll vom Typ Master-Slave erfolgt.

4. Flugsteuerungssystem nach Anspruch 1 oder 2, **dadurch gekennzeichnet, dass** der Rechner umfasst:
- einen ersten Kanal (COM), der dazu ausgelegt ist, Flugsteuerungsbefehle zu berechnen, sie in Form von Steuerbefehlsnachrichten an eine Mehrzahl der ersten Terminals zu übertragen, und Empfangsbestätigungen dieser Terminals zu empfangen sowie an sie Anfragen zu übertragen, um als Antwort die jeweiligen Zustände der von diesen Terminals kontrollierten Betätigungsgeräte und der von diesen Betätigungsgeräten betriebenen Ruder zu erhalten;
- einen zweiten Kanal (MON), der dazu ausgelegt ist, Flugsteuerungsbefehle zu berechnen und sie in Steuerbefehlsnachrichten umzuwandeln sowie die den Bus durchlaufenden Nachrichten von dem und zu dem ersten Kanal zu hören und aufzuzeichnen;
- wobei die Steuerbefehlsnachrichten des ersten Kanals mit jenen des zweiten Kanals verglichen werden.

5. Flugsteuerungssystem nach Anspruch 1 oder 2, **dadurch gekennzeichnet, dass** das System einen einzigen Bus umfasst, und dass der Rechner umfasst:
- einen ersten Kanal (COM), der dazu ausgelegt ist, Flugsteuerbefehle zu berechnen und sie in Form von Steuerbefehlsnachrichten an eine Mehrzahl der ersten Terminals zu übertragen und Empfangsbestätigungen dieser Terminals zu empfangen sowie an sie Anfragen zu übertragen, um als Antwort die jeweiligen Zustände der von diesen Terminals kontrollierten Betätigungsgeräte und der von diesen Betätigungsgeräten betriebenen Ruder zu erhalten, wobei der erste Kanal an den Bus durch eine Verbindung angeschlossen ist, die mittels eines Buscontrollers (BC) kontrolliert wird;
- einen zweiten Kanal (MON), der an den Controller angeschlossen und dazu ausgelegt ist, Flugsteuerbefehle zu berechnen und sie in Steuerbefehlsnachrichten umzuwandeln und die von dem Controller ausgesandten und empfangenen Nachrichten von und zu dem ersten Kanal zu hören und aufzuzeichnen;
- wobei die Steuerbefehlsnachrichten des ersten Kanals mit jenen des zweiten Kanals verglichen werden.

6. Flugsteuerungssystem nach Anspruch 1 oder 2, **dadurch gekennzeichnet, dass** das System einen einzigen Bus umfasst, und dass der Rechner umfasst:
- einen ersten Kanal (COM), der dazu ausgelegt ist, Flugsteuerbefehle zu berechnen und sie in Form von Steuerbefehlsnachrichten an eine Mehrzahl der ersten Terminals zu übertragen und Empfangsbestätigungen dieser Terminals zu empfangen sowie an sie Anfragen zu übertragen, um als Antwort die jeweiligen Zustände der von diesen Terminals kontrollierten Betätigungsgeräte und der von diesen Betätigungsgeräten betriebenen Ruder zu erhalten, wobei der erste Kanal an den Bus durch eine Verbindung angeschlossen ist, die mittels eines Buscontrollers (BC) kontrolliert wird;
- einen zweiten Kanal (MON), der an den ersten Kanal angeschlossen und dazu ausgelegt ist, Flugsteuerbefehle zu berechnen und sie in Steuerbefehlsnachrichten umzuwandeln, und die Nachrichten von und zu dem ersten Kanal zu empfangen, die von diesem an den zweiten Kanal weitergegeben werden;
- wobei die Steuerbefehlsnachrichten des ersten Kanals mit jenen des zweiten Kanals verglichen werden.

7. Flugsteuerungssystem nach einem der Ansprüche 4 bis 6, **dadurch gekennzeichnet, dass** das erste Terminal umfasst:
- einen ersten Kanal (COM), der dazu ausgelegt ist, die Steuerbefehlsnachrichten des Rechners zu empfangen, ihren Empfang zu bestätigen und elektrische Befehle an das Betätigungsgerät zu übertragen, das von diesem Terminal kontrolliert wird;
- einen zweiten Kanal (MON), der dazu ausgelegt ist, Anfragen von dem Rechner zu empfangen und mit Nachrichten betreffend den Zustand des Betätigungsgerätes und/oder den Zustand eines von diesem letztgenannten betriebenen Ruders zu antworten.

8. Flugsteuerungssystem nach Anspruch 7 in Abhängigkeit von Anspruch 4, **dadurch gekennzeichnet, dass** der erste und der zweite Kanal des Rechners sowie der erste und der zweite Kanal des ersten Terminals mit einem einzigen Bus verbunden sind.

9. Flugsteuerungssystem nach Anspruch 8, **dadurch gekennzeichnet, dass** der erste Kanal des Rechners einen Buscontroller (BC) in Reihe mit einem Sender/Empfänger (Tc) und einem Umwandler (Tf) zur Gewährleistung der Kopplung mit dem Bus umfasst, dass der zweite Kanal des Rechners ein Überwachungsmodul (BM) in Reihe mit einem Sender/Empfänger (Tc) und einem Umwandler (Tf) zur Gewährleistung der Kopplung mit dem Bus umfasst, und dass der erste und der zweite Kanal des ersten Terminals jeweils ein Kontrollmodul (RT) in Reihe mit einem Sender/Empfänger (Tc) und einem Umwandler (Tf) zur Gewährleistung der Kopplung mit dem Bus umfassen.

10. Flugsteuerungssystem nach Anspruch 7 in Abhängigkeit von Anspruch 4, **dadurch gekennzeichnet, dass** die ersten Kanäle des Rechners und des ersten Terminals mit einem ersten Bus (551) verbunden sind, und dass die zweiten Kanäle des Rechners und des ersten Terminals mit einem zweiten Bus (553) verbunden sind.

11. Flugsteuerungssystem nach Anspruch 10, **dadurch gekennzeichnet, dass** der erste und der zweite Kanal des Rechners jeweils einen Buscontroller (BC) in Reihe mit einem Sender/Empfänger (Tc) und einem Umwandler (Tf) zur Sicherstellung der Kopplung mit dem ersten bzw. dem zweiten Bus umfassen, und dass der erste und der zweite Kanal des ersten Terminals jeweils ein Kontrollmodul (RT) in Reihe mit einem Sender/Empfänger (Tc) und einem Umwandler (Tf) zur Sicherstellung der Kopplung mit dem ersten bzw. dem zweiten Bus umfassen.

12. Flugsteuerungssystem nach Anspruch 7 in Abhängigkeit von Anspruch 4, **dadurch gekennzeichnet, dass** der erste Kanal einen Buscontroller (425) in Reihe mit zwei parallelen ersten Zweigen umfasst, wobei jeder erste Zweig einen Sender/Empfänger (426-1, 426-2) in Reihe mit einem Umwandler (427-1, 427-2) zur Sicherstellung einer Kopplung mit einem ersten Bus (450) bzw. einem zweiten Bus (452) umfasst, dass der zweite Kanal ein Überwachungsmodul (424) in Reihe mit zwei parallelen zweiten Zweigen umfasst, wobei jeder zweite Zweig einen Empfänger (426-3, 426-4) in Reihe mit einem Umwandler (427-3, 427-4) zur Sicherstellung einer Kopplung mit dem ersten bzw. dem zweiten Bus umfasst, und dass der erste und der zweite Kanal des ersten Terminals jeweils ein Kontrollmodul (465) in Reihe mit zwei dritten parallelen Zweigen umfassen, wobei jeder dritte Zweig einen Sender/Empfänger (466-1, 466-2) in Reihe mit einem Umwandler (467-1, 467-2) zur Sicherstellung einer Kopplung mit dem ersten bzw. dem zweiten Bus umfasst.

13. Luftfahrzeug, umfassend eine Mehrzahl von Rudern, die dazu ausgelegt sind, durch Betätigungsgeräte betrieben zu werden, **dadurch gekennzeichnet, dass** es ein Flugsteuerungssystem nach einem der vorhergehenden Ansprüche umfasst.
